# EUROPEAN PATENT SPECIFICATION

(11) **EP 3 725 440 B1**
(45) Date of publication and mention of the grant of the patent: **30.08.2023**
(21) Application number: 20169581.4
(22) Date of filing: 15.04.2020
(51) Int. Cl.: B23B 29/034

(54) **LOCKOUT FOR DEEP REACH MACHINING TOOL**
VERRIEGELUNG FÜR ZERSPANUNGSWERKZEUG MIT GROSSER REICHWEITE
VERROUILLAGE POUR OUTIL D'USINAGE DE GRANDE PORTÉE

(30) Priority: 16.04.2019 US 201916385119
(43) Date of publication of application: 21.10.2020
(73) Proprietor: Raytheon Technologies Corporation, Farmington, CT 06032 (US)
(72) Inventor: ADEBOWALE, Sandra, Trumbull, CT Connecticut 06611 (US); CZYWCZYNSKI, Michael A, Plantsville, CT Connecticut 06479 (US); CLEMO, Grant, Burlington, CT Connecticut 06013 (US)
(74) Representative: Dehns

(56) References cited:
- EP-A1- 0 536 977
- EP-A1- 0 544 960
- EP-A1- 1 070 563
- DE-A1- 3 300 803
- US-A1- 2014 126 971

## Description

### BACKGROUND

The present disclosure relates to a deep reach machining tool and, more particularly, to a sensor for operation thereof.

Gas turbine engines, such as those which power modern commercial and military aircraft, include a compressor section, combustor section and turbine section arranged longitudinally around the engine centerline so as to provide an annular gas flow path. The compressor section compresses incoming atmospheric gases that are then mixed with a combustible fuel product and burned in the combustor section to produce a high energy exhaust gas stream. The turbine section extracts power from the exhaust gas stream to drive the compressor section. The exhaust gas stream produces forward thrust as it rearwardly exits the turbine section. Some engines may include a fan section, which is also driven by the turbine section, to produce bypass thrust.

Both the compressor and the turbine section include a rotor having a plurality of blades extending substantially radially outwardly therefrom and arranged in stages of circumferential rows. The rows of rotor blades are interdigitated with radially inwardly extending vanes attached to an outer engine casing. The rotor interior is a generally cylindrically shaped spool with a plurality of webs extending radially inwardly from the inner surface of the spool. The webs each terminate in an annular thickened portion known as a disk, leaving a circumferential opening at the center thereof. Effectively, these openings form the bore of the rotor through which the engine drive shafts extend.

Because of the high rotational speeds of the rotors, the rotors are balanced to minimize engine vibrations. To this end, engine manufacturers strive to remove any excess material that may unbalance the rotors. Additionally, increasing engine weight decreases engine efficiency, such that as much unneeded material as possible is removed from the engine parts. In particular, where engine parts are welded together, such as rotor sections that are joined by the inertia welding, electron beam welding, laser welding, or other forms of materials joining processes, it is incumbent upon the manufacturer to remove welding flash that is created during the materials joining operation from both the inner and outer spool surfaces.

Commonly, welding flash is removed from the inner spool surface by conventional machining techniques. That is, a machining or surface cutting tool having an elongate mounting post with a tool holder attached to the end of the post is inserted into the bore of the rotating rotor. The tool holder has a swing arm cartridge disposed at the end thereof that together have a generally "L" shaped configuration. The swing arm cartridge is then moved so that the insert is in a working position relative to the working inner rotor surface.

The deep reach machining tool is operated manually by the operator who opens and closes the swing arm cartridge using a hand wrench which may pose concerns in the manual mode, as displacement of the tool due to misalignment or incorrect tool path, the overall operation (machine, tool, part, and operator) may thus be at risk. Previously, once the tool is in the part the only way to determine if the tool is open or close replies solely on the operator's memory.

EP 0544960 A1 discloses a prior art deep reach machining tool as set forth in the preamble of claim 1.

### SUMMARY

According to the invention, there is provided a deep reach machining tool according to claim 1.

In an optional embodiment, the swing arm cartridge pivots relative to the tool body in response to rotation of a mechanical input.

In an optional embodiment, the mechanical input receives a hand wrench.

An optional embodiment includes a terminal block mounted to the tool body.

In an optional embodiment, the terminal block is in communication with the close sensor and the open sensor.

In an optional embodiment, the terminal block is in communication with an I/O interface of a CNC machine to which the deep reach machining tool is mounted.

In an optional embodiment, the terminal block is in wired communication with an I/O interface of a CNC machine to which the deep reach machining tool is mounted.

In an optional embodiment, the terminal block is in wireless communication with an I/O interface of a CNC machine to which the deep reach machining tool is mounted.

An optional embodiment includes a cutting tool mounted to the swing arm cartridge.

According to the invention, there is provided a method for operating a deep reach machining tool according to claim 10.

In an optional embodiment, the swing arm cartridge of the deep reach machining tool is manually positioned.

In an optional embodiment, the swing arm cartridge of the deep reach machining tool is manually positioned via a hand wrench.

An optional embodiment includes transmitting the position to an I/O interface of a CNC machine to which the deep reach machining tool is mounted.

An optional embodiment includes transmitting the position to an I/O interface of a CNC machine to which the deep reach machining tool is mounted via a sensor cable.

An optional embodiment includes wirelessly transmitting the position to an I/O interface of a CNC machine to which the deep reach machining tool is mounted.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
FIG. 1 is a schematic partial cross-section of a deep reach machining tool in a closed position with respect to a workpiece.
FIG. 2 is an expanded front view of the deep reach machining tool in the closed position.
FIG. 3 is a schematic partial cross-section of the deep reach machining tool in an open position with respect to a workpiece.
FIG. 4 is an expanded front view of the deep reach machining tool in the open position.
FIG. 5 is a method of operating the deep reach machining tool.

### DETAILED DESCRIPTION

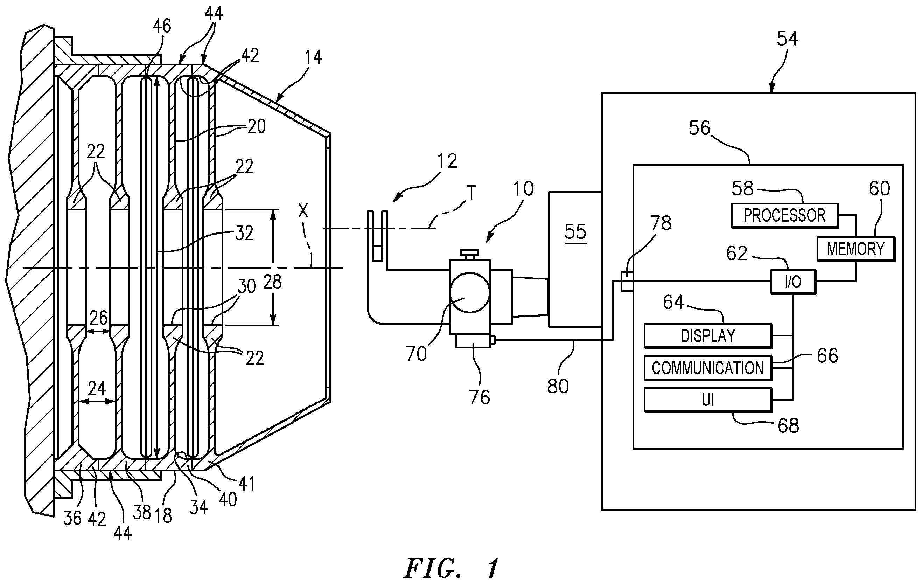

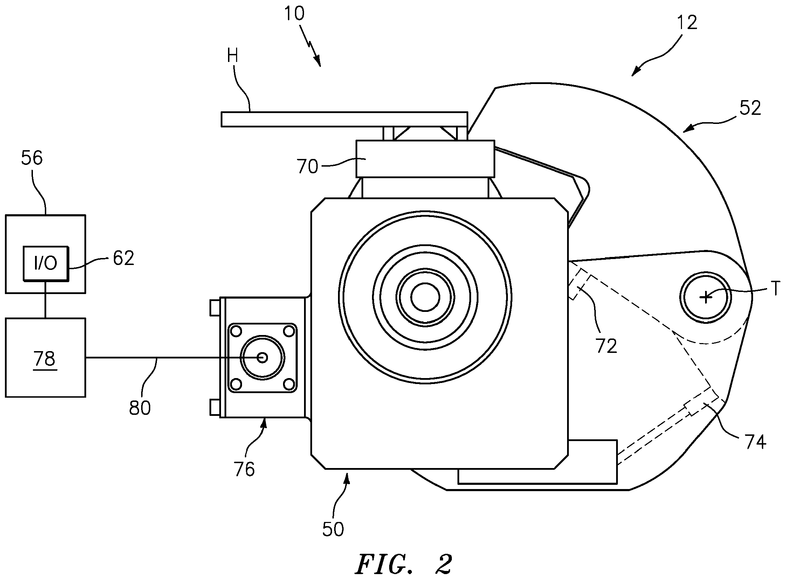

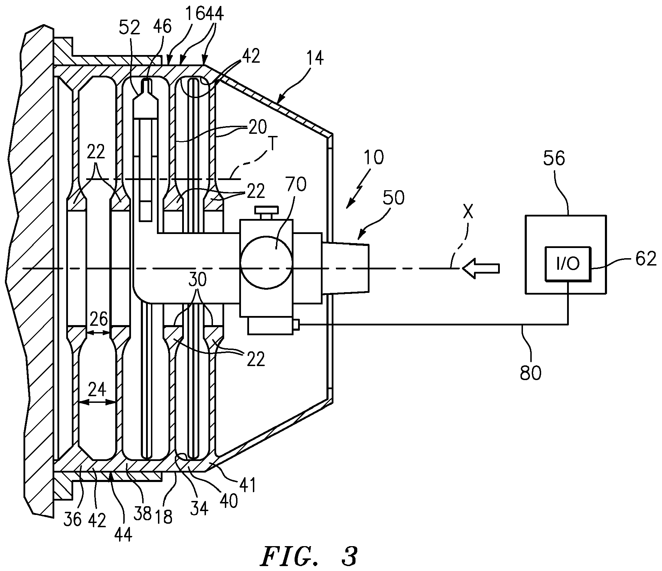

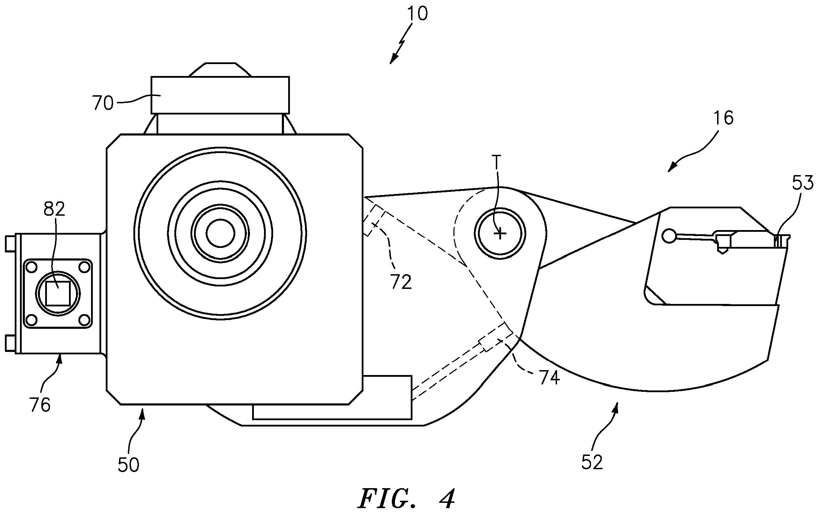

FIG. 1 schematically illustrates a deep reach machining tool 10 shown in a closed position 12 (also shown in FIG. 2) relative to a gas turbine engine rotor 14 and in an open position 16 (FIG. 3 and 4). The rotor 14 is shown schematically since actual configurations vary between engines and are generally applicable to any engine rotor as well as other components which require a deep reach through a confined access point.

The rotor 14 generally includes a spool 18 having a plurality of webs 20 that extend radially inwardly. The webs 20 terminate in a thickened disk portion 22. Adjacent webs 20 are separated by an inter-web gap 24 while adjacent disk portions 22 are separated by an inter-disk gap 26. A bore diameter 28 is defined by the inner surface 30 of the disk portions 22 along a central axis X while an internal rotor diameter 32 is defined by the inner surface 34 of spool 18.

The rotor 14 may be manufactured by techniques such as inertia welding or other materials joining processes of individual circumferential rotor sections such as sections 36, 38, 40, and 41. Each rotor section 36, 38, 40, and 41 includes a spacer arm portion 42 that when welded to an adjacent spacer arm portion forms a spacer 44 of spool 18. During the joining of spacer arm portions 42 to form spacers 44, welding flash 46 may be created on both the interior and exterior surfaces of spool 18. Removal of the welding flash 46 from the exterior surface of rotor 14 is relatively straightforward compared to its removal from the interior surface. Removal of welding flash 46 is necessary to provide a properly balanced and light weight engine structure.

The deep reach machining tool 10 is extendable to allow greater reach so that the ratio of the rotor diameter 32 to the bore diameter 28 can be maximized. The deep reach machining tool 10 includes a tool body 50 and a swing arm cartridge 52 that contains the cutting tool 53 (FIG. 4). The tool body 50 is mounted in a CNC machine 54 (illustrated schematically in FIG. 1) such as via a turret base 55 that is operable to automatically change the deep reach machining tool 10. The CNC machine 54 positions the deep reach machining tool 10 and performs the machining operations in response to a control system 56.

The control system 56 executes machining operations of the CNC machine 54 with the deep reach machining tool 10. The control system 56 may include at least one processor 58 (e.g., a controller, microprocessor, microcontroller, digital signal processor, etc.), memory 60, and an input/output (I/O) interface 62. While not specifically shown, the control system 56 may include other computing devices (e.g., servers, mobile computing devices, etc.) and computer aided manufacturer (CAM) systems which may be in communication with each other and/or the control system 56 via a communication network to perform one or more of the disclosed functions. The processor 58 and the I/O interface 62 are communicatively coupled to the memory 60. The memory 60 may be embodied as any type of computer memory device (e.g., volatile memory such as various forms of random access memory) which stores data and control algorithms such as the logic as described herein. The I/O interface 62 is communicatively coupled to a number of hardware, firmware, and/or software components, including, for example, a display 64, a communication subsystem 66, a user interface (UI) 68, and others.

The swing arm cartridge 52 pivots relative to the tool body 50 about an axis T in response to rotation of a manual input 70 such as with a hand wrench "H". The tool body 50 includes a close sensor 72 (FIG. 2) and an open sensor 74 (FIG. 2) which are actuated in response to physical contact with the cartridge 52 (FIG. 2). The close sensor 72 and the open sensor 74 are in electrical communication with a terminal block 76 on the tool body 50. The terminal block 76 is then in communication with the control system 56 to provide a signal from the sensors 72, 74 to the control system 56 indicative whether the swing arm cartridge 52 is in a closed position (FIG. 1) or an open position (FIG. 2) with respect to the tool body 50.

The terminal block 76 may be wired to a connector 78 with a sensor cable 80 that is in communication with the control system 56 via the I/O interface 62 to permit disconnection of the deep reach machining tool 10 such that another tool can be selected by the CNC machine 54 and/or an operator. The terminal block 76 may be powered by the low voltage current supplied via the sensor cable 80. The sensor cable 80 allows communication of sensor status using the I/O interface 62 signals to the CNC machine control using decoded system variables. The sensor communication will be activated through, for example, miscellaneous "M" code functions as typically programmed in CNC controls to determine whether the desired fully open or fully closed position of the swing arm cartridge 52 has been completed. These M-codes may be generated in the NC program from the CAM system via programmer input. Additional M-code functions may be programmed as a safeguard to ensure the sensor cable 80 has been connected or disconnected to allow for a tool change to occur.

Alternatively, the terminal block 76 may include a wireless communication module 82 (FIG. 4) using, for example, BLUETOOTH and/or Near Field Communication (NFC) technology to communicate with the I/O interface 62 thus obviating manual connection/disconnection of the sensor cable 80.

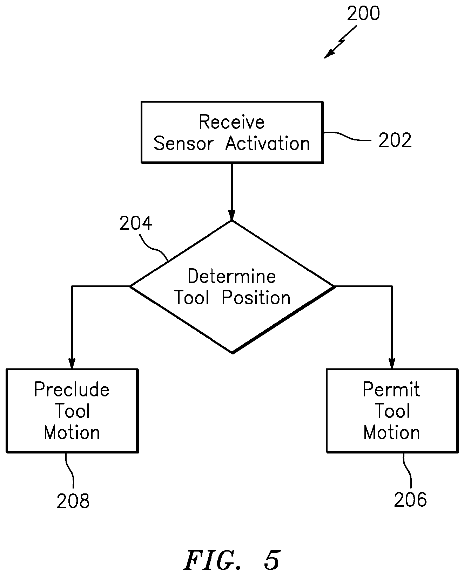

With reference to FIG. 5, a method 200 for operation of the deep reach machining tool 10 is disclosed in terms of functional block diagrams. The functions are programmed software routines capable of execution in various microprocessor based electronics control embodiments and represented herein as the block diagrams.

Initially, the control system 56 receives (202) a signal from the sensors 72, 74 for determining (204) a position of the swing arm cartridge 52 of the deep reach machining tool 10. Then, based on the determining (204), rapid traverse is permitted (206) if the close sensor 72 is actuated, and rapid traverse of the deep reach machining tool 10 is precluded (208) if the open sensor 74 is actuated. That is, the tool position of deep reach machining tool 10 is locked out to avoid part collision. The system and method 200 thereby ensures operator safety, protect the part being machined, and reduce setup time and cycle time.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be appreciated that within the scope of the appended claims, the disclosure may be practiced other than as specifically described. For that reason the appended claims should be studied to determine true scope and content.

## Claims

1. A deep reach machining tool (10), comprising:
a tool body (50); and
a swing arm cartridge (52) that pivots relative to the tool body (50) about an axis (T);
**characterised in that** the deep reach machining tool (10) further comprises:
an open sensor (74) that indicates that the swing arm cartridge (52) is in an open position with respect to the tool body (50); and
a close sensor (72) that indicates that the swing arm cartridge (52) is in a closed position with respect to the tool body (50).

2. The deep reach machining tool (10) as recited in claim 1, wherein the swing arm cartridge (52) pivots relative to the tool body (50) in response to rotation of a mechanical input (70).

3. The deep reach machining tool (10) as recited in claim 2, wherein the mechanical input (70) receives a hand wrench (H).

4. The deep reach machining tool (10) as recited in claim 1, 2 or 3, further comprising a terminal block (76) mounted to the tool body (50).

5. The deep reach machining tool (10) as recited in claim 4, wherein the terminal block (76) is in communication with the close sensor (72) and the open sensor (74).

6. The deep reach machining tool (10) as recited in claim 4 or 5, wherein the terminal block (76) is in communication with an I/O interface (62) of a CNC machine (54) to which the deep reach machining tool (10) is mounted.

7. The deep reach machining tool (10) as recited in claim 4 or 5, wherein the terminal block (76) is in wired communication with an I/O interface (62) of a CNC machine (54) to which the deep reach machining tool (10) is mounted.

8. The deep reach machining tool (10) as recited in claim 4 or 5, wherein the terminal block (76) is in wireless communication with an I/O interface (62) of a CNC machine (54) to which the deep reach machining tool (10) is mounted.

9. The deep reach machining tool (10) as recited in any preceding claim, further comprising a cutting tool (53) mounted to the swing arm cartridge (52).

10. A method for operating the deep reach machining tool (10) of claim 1, comprising:
determining a position of the swing arm cartridge (52) of the deep reach machining tool (10); and
precluding rapid traverse of the deep reach machining tool (10) in response to the tool position.

11. The method as recited in claim 10, wherein the swing arm cartridge (52) of the deep reach machining tool (10) is manually positioned.

12. The method as recited in claim 10, wherein the swing arm cartridge (52) of the deep reach machining tool (10) is manually positioned via a hand wrench (H).

13. The method as recited in claim 10, 11 or 12, further comprising transmitting the position to an I/O interface (62) of a CNC machine (54) to which the deep reach machining tool (10) is mounted.

14. The method as recited in claim 10, 11 or 12, further comprising transmitting the position to an I/O interface (62) of a CNC machine (54) to which the deep reach machining tool (10) is mounted via a sensor cable (80).

15. The method as recited in claim 10, 11 or 12, further comprising wirelessly transmitting the position to an I/O interface (62) of a CNC machine (54) to which the deep reach machining tool (10) is mounted.

## Patentansprüche

1. Tief greifendes Bearbeitungswerkzeug (10), umfassend:
einen Werkzeugkörper (50); und
ein Schwingarmmodul (52), das relativ zu dem Werkzeugkörper (50) um eine Achse (T) schwenkt;
**dadurch gekennzeichnet, dass** das tief greifende Bearbeitungswerkzeug (10) ferner Folgendes umfasst:
einen Öffnungssensor (74), der angibt, dass sich das Schwingarmmodul (52) in Bezug auf den Werkzeugkörper (50) in einer offenen Position befindet; und
einen Schließsensor (72), der angibt, dass sich das Schwingarmmodul (52) in Bezug auf den Werkzeugkörper (50) in einer geschlossenen Position befindet.

2. Tief greifendes Bearbeitungswerkzeug (10) nach Anspruch 1, wobei das Schwingarmmodul (52) relativ zu dem Werkzeugkörper (50) als Reaktion auf eine Drehung eines mechanischen Eingangs (70) schwenkt.

3. Tief greifendes Bearbeitungswerkzeug (10) nach Anspruch 2, wobei der mechanische Eingang (70) einen Handschraubenschlüssel (H) aufnimmt.

4. Tief greifendes Bearbeitungswerkzeug (10) nach Anspruch 1, 2 oder 3, ferner einen Anschlussblock (76) umfassend, der an dem Werkzeugkörper (50) montiert ist.

5. Tief greifendes Bearbeitungswerkzeug (10) nach Anspruch 4, wobei der Anschlussblock (76) mit dem Schließsensor (72) und dem Öffnungssensor (74) in Kommunikation steht.

6. Tief greifendes Bearbeitungswerkzeug (10) nach Anspruch 4 oder 5, wobei der Anschlussblock (76) mit einer I/O-Schnittstelle (62) einer CNC-Maschine (54) in Kommunikation steht, an der das tief greifende Bearbeitungswerkzeug (10) montiert ist.

7. Tief greifendes Bearbeitungswerkzeug (10) nach Anspruch 4 oder 5, wobei der Anschlussblock (76) mit einer I/O-Schnittstelle (62) einer CNC-Maschine (54) in verdrahteter Kommunikation steht, an der das tief greifende Bearbeitungswerkzeug (10) montiert ist.

8. Tief greifendes Bearbeitungswerkzeug (10) nach Anspruch 4 oder 5, wobei der Anschlussblock (76) mit einer I/O-Schnittstelle (62) einer CNC-Maschine (54) in drahtloser Kommunikation steht, an der das tief greifende Bearbeitungswerkzeug (10) montiert ist.

9. Tief greifendes Bearbeitungswerkzeug (10) nach einem der vorhergehenden Ansprüche, ferner ein Schneidwerkzeug (53) umfassend, das an dem Schwingarmmodul (52) montiert ist.

10. Verfahren zum Betreiben des tief greifenden Bearbeitungswerkzeugs (10) nach Anspruch 1, umfassend:
Bestimmen einer Position des Schwingarmmoduls (52) des tief greifenden Bearbeitungswerkzeugs (10); und
Verhindern eines Eilgangs des tief greifenden Bearbeitungswerkzeugs (10) als Reaktion auf die Werkzeugposition.

11. Verfahren nach Anspruch 10, wobei das Schwingarmmodul (52) des tief greifenden Bearbeitungswerkzeugs (10) manuell positioniert wird.

12. Verfahren nach Anspruch 10, wobei das Schwingarmmodul (52) des tief greifenden Bearbeitungswerkzeugs (10) manuell mittels eines Handschraubenschlüssels (H) positioniert wird.

13. Verfahren nach Anspruch 10, 11 oder 12, ferner Übermitteln der Position an eine I/O-Schnittstelle (62) einer CNC-Maschine (54) umfassend, an der das tief greifende Bearbeitungswerkzeug (10) montiert ist.

14. Verfahren nach Anspruch 10, 11 oder 12, ferner Übermitteln der Position mittels eines Sensorkabels (80) an eine I/O-Schnittstelle (62) einer CNC-Maschine (54) umfassend, an der das tief greifende Bearbeitungswerkzeug (10) montiert ist.

15. Verfahren nach Anspruch 10, 11 oder 12, ferner drahtloses Übermitteln der Position an eine I/O-Schnittstelle (62) einer CNC-Maschine (54) umfassend, an der das tief greifende Bearbeitungswerkzeug (10) montiert ist.

## Revendications

1. Outil d'usinage de grande portée (10), comprenant :
un corps d'outil (50) ; et
une cartouche à bras pivotant (52) qui pivote par rapport au corps d'outil (50) autour d'un axe (T) ;
**caractérisé en ce que** l'outil d'usinage de grande portée (10) comprend en outre :
un capteur d'ouverture (74) qui indique que la cartouche à bras pivotant (52) est dans une position ouverte par rapport au corps d'outil (50) ; et
un capteur de fermeture (72) qui indique que la cartouche à bras pivotant (52) est dans une position fermée par rapport au corps d'outil (50).

2. Outil d'usinage de grande portée (10) selon la revendication 1, dans lequel la cartouche à bras pivotant (52) pivote par rapport au corps d'outil (50) en réponse à la rotation d'une entrée mécanique (70).

3. Outil d'usinage de grande portée (10) selon la revendication 2, dans lequel l'entrée mécanique (70) reçoit une clé à main (H).

4. Outil d'usinage de grande portée (10) selon la revendication 1, 2 ou 3, comprenant en outre un bornier (76) monté sur le corps d'outil (50).

5. Outil d'usinage de grande portée (10) selon la revendication 4, dans lequel le bornier (76) est en communication avec le capteur de fermeture (72) et le capteur d'ouverture (74).

6. Outil d'usinage de grande portée (10) selon la revendication 4 ou 5, dans lequel le bornier (76) est en communication avec une interface E/S (62) d'une machine CNC (54) sur laquelle l'outil d'usinage de grande portée (10) est monté.

7. Outil d'usinage de grande portée (10) selon la revendication 4 ou 5, dans lequel le bornier (76) est en communication filaire avec une interface E/S (62) d'une machine CNC (54) sur laquelle l'outil d'usinage de grande portée (10) est monté.

8. Outil d'usinage de grande portée (10) selon la revendication 4 ou 5, dans lequel le bornier (76) est en communication sans fil avec une interface E/S (62) d'une machine CNC (54) sur laquelle l'outil d'usinage de grande portée (10) est monté.

9. Outil d'usinage de grande portée (10) selon une quelconque revendication précédente, comprenant en outre un outil de découpe (53) monté sur la cartouche à bras pivotant (52).

10. Procédé pour faire fonctionner l'outil d'usinage de grande portée (10) selon la revendication 1, comprenant :
la détermination d'une position de la cartouche à bras pivotant (52) de l'outil d'usinage de grande portée (10) ; et
le fait d'empêcher le déplacement rapide de l'outil d'usinage de grande portée (10) en réponse à la position d'outil.

11. Procédé selon la revendication 10, dans lequel la cartouche à bras pivotant (52) de l'outil d'usinage de grande portée (10) est positionnée manuellement.

12. Procédé selon la revendication 10, dans lequel la cartouche à bras pivotant (52) de l'outil d'usinage de grande portée (10) est positionnée manuellement via une clé à main (H).

13. Procédé selon la revendication 10, 11 ou 12, comprenant en outre la transmission de la position à une interface E/S (62) d'une machine CNC (54) sur laquelle l'outil d'usinage de grande portée (10) est monté.

14. Procédé selon la revendication 10, 11 ou 12, comprenant en outre la transmission de la position à une interface E/S (62) d'une machine CNC (54) sur laquelle l'outil d'usinage de grande portée (10) est monté via un câble (80) de capteur.

15. Procédé selon la revendication 10, 11 ou 12, comprenant en outre la transmission sans fil de la position à une interface E/S (62) d'une machine CNC (54) sur laquelle l'outil d'usinage de grande portée (10) est monté.
